# EUROPEAN PATENT SPECIFICATION

(11) **EP 3 200 300 B1**
(45) Date of publication and mention of the grant of the patent: **26.02.2025**
(21) Application number: 15844951.2
(22) Date of filing: 25.09.2015
(51) Int. Cl.: H02H 3/02, H01H 71/43, H02H 1/06, H01H 71/52, H02H 3/08

(54) **ELECTRONIC TRIP UNIT PROTECTION DEVICE AND PROTECTION METHOD**
SCHUTZVORRICHTUNG UND SCHUTZVERFAHREN FÜR EINE ELEKTRONISCHE AUSLÖSEEINHEIT
DISPOSITIF DE PROTECTION D'UNITÉ DE DÉCLENCHEMENT ÉLECTRONIQUE ET PROCÉDÉ DE PROTECTION

(30) Priority: 26.09.2014 CN 201410502346
(43) Date of publication of application: 02.08.2017
(73) Proprietor: Seari Electric Technology Co., Ltd., Shanghai 200063 (CN); Shanghai Noark Electric Co., Ltd., Shanghai 201614 (CN)
(72) Inventor: HU, Yinglong, Shanghai 200063 (CN); WU, Hailiang, Shanghai 200063 (CN)
(74) Representative: Osha BWB
(86) International application number: PCT/CN2015/090636
(87) International publication number: WO 2016/045607

(56) References cited:
- EP-A2- 0 580 285
- CN-A- 1 547 230
- CN-A- 103 777 137
- CN-U- 202 585 289
- CN-U- 203 786 556
- DE-A1- 19 954 038
- US-A1- 2008 012 667

## Description

### BACKGROUND OF THE INVENTION

### 1. Field of the Invention

The present invention relates to low-voltage electric apparatuses, more particularly, relates to circuit breakers of low-voltage electric apparatuses.

### 2. The Related Art

Circuit breakers are important low-voltage electrical apparatuses. Molded case electronic circuit breakers are widely used because of its small size and simple structure. A core component of an electronic circuit breaker is an electronic release. An execution mechanism of the electronic release is generally a magnetic flux converter. The magnetic flux converter comprises a magnetic flux converter coil, a permanent magnet, a counter-force spring, an ejector rod etc,. During normal operation of a primary loop (i.e. the main loop or the load circuit), the magnetic flux converter remains in an attraction status, the permanent magnet attracts the ejector rod so that the ejector rod will not trigger a release mechanism. A magnetic force of the permanent magnet is larger than a spring force of the counter-force spring. No current flows through the magnetic flux converter coil and no electromagnetic force is generated. The permanent magnet attracts the ejector rod by its magnetic force, and the circuit breaker remains closed. When it is monitored that a primary loop (i.e. the main loop or the load circuit) fails and needs to be protected, a circuit composed of an energy storage capacitor and the magnetic flux converter coil within the electronic release is closed. The energy storage capacitor discharges the stored electrical energy and forms a current flowing through the magnetic flux converter coil. The current causes a generation of an electromagnetic force in the magnetic flux converter coil. The electromagnetic force and the spring force of the counter-force spring are in the same direction, and are opposite to the magnetic force of the permanent magnet. A sum of the electromagnetic force and the spring force is larger than the magnetic force of the permanent magnet. The ejector rod is released and ejected out, and the ejector rod triggers the release mechanism, the circuit breaker is disconnected and the primary loop is cut off.

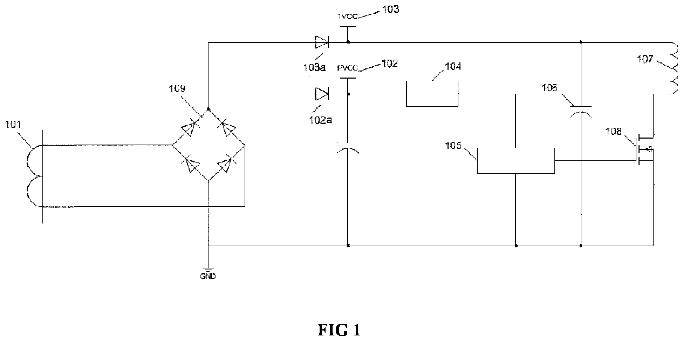

FIG. 1 illustrates a principle diagram of an electronic release according to prior art. According to FIG. 1, the electronic release comprises a current transformer 101, a filtering and rectification circuit 109, a control power supply circuit 102, a release power supply circuit 103, a control circuit composed of a step-down circuit 104 and a MCU unit 105, and a release circuit composed of an energy storage capacitor 106, a magnetic flux converter 107 and a control switch 108.

The current transformer 101 is connected in series in a primary loop. The current transformer 101 generates an induced current from the primary loop current. The filtering and rectification circuit 109 is connected to an output of the current transformer 101. The filtering and rectification circuit 109 filters and rectifies the induced current of the current transformer. An output of the filtering and rectification circuit 109 is divided into two paths, which are connected to the control power supply circuit 102 and the release power supply circuit 103 respectively. Inputs of the control power supply circuit 102 and the release power supply circuit 103 are both connected to the output of the filtering and rectification circuit 109. According to the embodiment shown in the figure, the control power supply circuit 102 and the release power supply circuit 103 each comprises a diode 102a and 103a, respectively. The control circuit comprises a step-down circuit 104 and a MCU unit 105. The step-down circuit 104 is connected to an output of the control power supply circuit 103. The step-down circuit 104 reduces an output voltage of the control power supply circuit 103 to a rated operation voltage of the MCU unit 105. The MCU unit 105 is connected to an output of the step-down circuit 104 and is supplied by the step-down circuit 104. The MCU unit 105 also receives a monitoring signal indicating whether a fault exists in the primary loop. The monitoring signal is connected to a signal I/O end of the MCU unit 105. FIG. 1 focuses on a current loop rather than a signal loop, so the monitoring signal for the primary loop is not shown in FIG. 1. The release circuit comprises an energy storage capacitor 106, a magnetic flux converter 107 and a control switch 108 which are connected in series. The output of the release power supply circuit 103 is connected to the energy storage capacitor 106, the output of the MCU unit is connected to the control switch 108 to turn on or off the control switch. The energy storage capacitor 106, the magnetic flux converter 107 and the control switch 108 form a complete loop, that is, the release circuit. During normal operation, the MCU unit 105 controls the control switch 108 to turn off and the release circuit is turned off. The release power supply circuit 103 charges the energy storage capacitor 106. When the primary loop fails, the MCU unit 105 outputs a release instruction to turn on the control switch 108, the release circuit is turned on. The energy storage capacitor 106 discharges and causes an appearance of a current in a coil of the magnetic flux converter 107. This current generates an electromagnetic force, which assists a counter-force springs of the magnetic flux converter to overcome a magnetic force of a permanent magnet, so that an ejector rod is ejected out and drives a release mechanism to operate and break a circuit breaker.

According to national standard requirements, under the condition of no external auxiliary power supply, the electronic release shall work reliably and achieve basic protection functions when all phase currents in the primary loop (the main loop) are not less than 0.4 times of a rated current, that is, 0.4 In. As shown in FIG. 1, an induced current generated by the current transformer 101 is used as two purposes, on one hand, normal operation of the MCU unit is met, and on the other hand, the energy storage capacitor is charged. Normal operation of the MCU unit is preferentially considered. The induced current is preferentially used for supplying power for the MCU, and an extra current is used to charge the energy storage capacitor. When a current in the primary loop is large, such as operating at the rated current In, the induced current is also large and can meet both purposes at a same time. When the current in the primary loop is small, especially when it is close to the lower limit of the national standard, that is, 0.4 In, the induced current generated by the current transformer is also small, then normal operation of the MCU unit is preferentially met. Since the control circuit connected to a rear end of the control power supply circuit has a heavy load, the current is mainly distributed to the control circuit, and the output current of the release power supply circuit is small, which will cause an insufficient charging of the energy storage capacitor and the energy capacitor cannot be charged to an enough voltage. Generally, the energy storage capacitor needs to be charged to 12V~15V to ensure that the current in the coil of the magnetic flux converter is large enough, so that the overlapped electromagnetic force generated by the current and the spring force of the counter-force spring can be larger than the magnetic force of the permanent magnet. Under the circumstance that an insufficient charging of the energy storage capacitor, such as lower than 12V, is caused by a small current, when the primary loop fails, the energy storage capacitor discharges and generates a current in the coil of the magnetic flux converter. However, the electromagnetic force generated by the current is not large enough, the magnetic force of the permanent magnet is still larger than summary of the electromagnetic force and the spring force of the counter-force spring. The ejector rod is still attracted and cannot be ejected out, the release mechanism does not operate and the circuit breaker is not broken.

US 2008/012667 A1 describes a time-synchronized trip implementation for a motor circuit protector (MCP) having a reconfigurable microcontroller. The microcontroller causes a power supply to be charged for an initial time period during a charging mode. During a charge only mode, a control algorithm charges a stored energy circuit from a minimum voltage regulation level to a voltage level indicative of sufficient energy to actuate a trip solenoid. The charging of capacitors is regulated by a voltage regulation module, which holds the stored energy circuit in the charge mode until a start voltage threshold level is reached for the supply voltage from the stored energy circuit. An onboard comparator is configured for a predetermined self-protection level of the MCP, and fault currents that exceed the comparator's threshold will directly drive a solenoid to trip the MCP. The microcontroller reconfigures the comparator's threshold to both measure and charge the power supply toward a stored energy trip voltage, which will charge quickly when high fault currents are present. As a result, self-protection is not compromised. After the trip voltage is reached, the microcontroller reconfigures the onboard comparator's threshold for self-protection trip levels. When a trip event occurs in this mode, stored energy trip activation occurs. The MCP includes user-selectable trip settings, and the microcontroller reconfigures the comparator threshold levels for user-selectable self-protection levels.

### SUMMARY

The present invention provides a protection system and a protection method that can charge an energy storage capacitor to a sufficient voltage when the current in the primary loop is a small current.

According to the present invention, a protection system for electronic release is provided. The protection system comprises an electronic release including an energy storage capacitor, a control power supply circuit, and a MCU unit. The protection system further comprises a protection device connected to the energy storage capacitor of the electronic release. The control power supply circuit is configured to charge the energy storage capacitor to a sufficient voltage when a primary loop current is a small current. The small current is 0.4~0.8 times of a rated primary loop current, and the sufficient voltage is 12V~15V. The control power supply circuit is configured to provide the energy storage capacitor with an additional charge supplied by extra electrical energy exceeding the electrical energy needed for a normal operation of the MCU unit.

The electronic release further comprises a current transformer, a filtering and rectification circuit, a control power supply circuit, a release power supply circuit, a control circuit and a release circuit. The current transformer is connected in series in a primary loop and generating an induced current from the primary loop current. The filtering and rectification circuit is connected to an output of the current transformer, the filtering and rectification circuit filters and rectifies the induced current of the current transformer. The control power supply circuit is connected to an output of the filtering and rectification circuit. The release power supply circuit is connected to the output of the filtering and rectification circuit. The control circuit comprises a step-down circuit and the MCU unit, the step-down circuit is connected to an output of the control power supply circuit and reduces an output voltage of the control power supply circuit. The MCU unit is connected to an output of the step-down circuit and is supplied by the step-down circuit. The release circuit comprises the energy storage capacitor, a magnetic flux converter and a control switch which are connected in series. The output of the control power supply circuit is connected to the energy storage capacitor. The output of the MCU unit is connected to the control switch to turn on or off the control switch. During normal operation, the MCU unit controls the control switch to turn off and the release circuit is turned off, the release power supply circuit charges the energy storage capacitor. When the primary loop fails, the MCU unit outputs a release instruction to turn on the control switch, the release circuit is turned on, the energy storage capacitor discharges to enable the magnetic flux converter to generate an electromagnetic force and trigger a release mechanism.

According to the present invention, the protection device comprises a resistor, a boost circuit and a diode which are connected in series, a first end of the resistor is connected to the control power supply circuit, a second end of the resistor is connected to an input of the boost circuit, an output of the boost circuit is connected to the energy storage capacitor through the diode, the output of the diode is connected to the MCU unit.

According to the present invention, the output of the control power supply circuit is provided to the MCU unit, and the extra electrical energy is used to charge the energy storage capacitor through the protection device.

According to an example not making part of the claimed subject-matter, the protection device comprises a rechargeable battery circuit and a PWM charging circuit. The rechargeable battery circuit comprises a charging circuit and a rechargeable battery, an input of the charging circuit is connected to the output of the step-down circuit, an output of the charging circuit is connected to the rechargeable battery through a diode. The PWM charging circuit comprises a control circuit and a boost circuit, an input of the control circuit is connected to an output of the rechargeable battery, an output of the control circuit is connected to an input of the boost circuit, an enabling end of the control circuit is connected to the MCU unit, an output of the boost circuit is connected to the energy storage capacitor through a diode.

According to an example not making part of the claimed subject-matter, an output of the step-down circuit charges the rechargeable battery, the MCU unit outputs a duty cycle signal to the control circuit, the control circuit enables the rechargeable battery to charge the energy storage capacitor in a PWM mode according to the duty cycle signal.

According to an example not making part of the claimed subject-matter, a charging time of the energy storage capacitor is determined by the duty cycle signal, the duty cycle signal is related to a fault type of the electronic release.

According to the present invention, a protection method for electronic release is provided. The method comprises providing an electronic release comprising an energy storage capacitor, control power supply circuit, and a MCU unit. The method further comprises providing a protection device connected to the energy storage capacitor. The method further comprises providing additional charge to the energy storage capacitor of the electronic release, charging the energy storage capacitor to a sufficient voltage when a primary loop current is a small current. The small current is 0.4~0.8 times of a rated primary loop current, and the sufficient voltage is 12V~15V. The additional charge provided to the energy storage capacitor is supplied by extra electrical energy that exceeds the electrical energy needed for a normal operation of the MCU unit of the electronic release. The protection device comprises a resistor, a boost circuit and a diode which are connected in series, a first end of the resistor is connected to the control power supply circuit, a second end of the resistor is connected to an input of the boost circuit, an output of the boost circuit is connected to the energy storage capacitor through the diode, the output of the diode is connected to the MCU unit. The protection method further comprises providing output of the control power supply circuit to the MCU unit, and using the extra electrical energy to charge the energy storage capacitor through the protection device.

According to an embodiment, the extra electrical energy is outputted from a control power supply circuit of the electronic release, and is used to charge the energy storage capacitor in a direct-current manner after resistance current-limiting and boosting.

According to an example not making part of the claimed subject-matter, the additional charge is supplied by a rechargeable battery, the rechargeable battery is charged by the extra electrical energy, the MCU unit outputs a duty cycle signal according to a fault type of the electronic release, the rechargeable battery charges the energy storage capacitor in a PWM mode through a control circuit and a boost circuit based on the duty cycle.

The protection system and the protection method for electronic release of the present invention charge the energy storage capacitor with extra electrical energy that exceeds the electrical energy needed for a normal operation of a MCU unit. The energy storage capacitor can still be charged to a sufficient voltage when the current in the primary loop is a small current, so that the magnetic flux converter can generate an electromagnetic force that is large enough to trigger the release mechanism.

### BRIEF DESCRIPTION OF THE DRAWINGS

The above and other features, natures, and advantages of the invention will be apparent by the following description of the embodiments incorporating the drawings, wherein,
FIG. 1 illustrates a principle diagram of an electronic release according to prior art.
FIG. 2 illustrates a principle diagram of a protection system according to an embodiment of the present invention.
FIG. 3 illustrates a principle diagram of a protection system according to an example not making part of the claimed subject-matter.

### DETAILED DESCRIPTION OF EMBODIMENTS

The present invention provides a protection system for electronic release comprising an electronic release including an energy storage capacitor and a MCU unit. The protection system further comprises a protection device connected to an energy storage capacitor of the electronic release. The energy storage capacitor is charged to a sufficient voltage when a primary loop current is a small current. The small current is 0.4~0.8 times of a rated primary loop current and the sufficient voltage is 12V~15V. The energy storage capacitor is provided with an additional charge supplied by extra electrical energy exceeding the electrical energy needed for a normal operation of the MCU unit. In some embodiments, the small current is 0.4~0.5 times of the rated primary loop current. Even, in some embodiments, the small current is 0.4~0.45 times of the rated primary loop current.

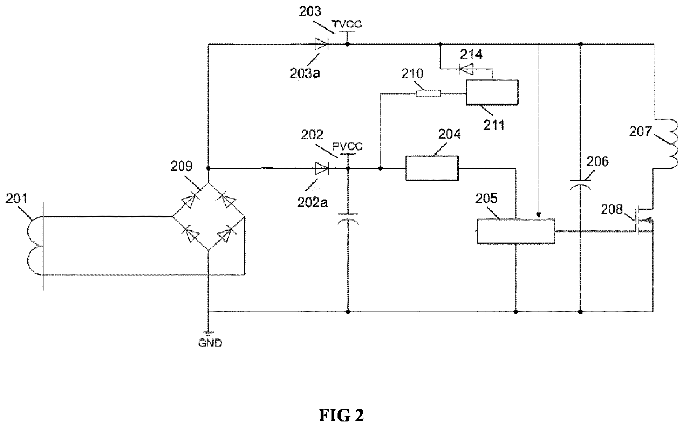

Referring to FIG. 2, FIG. 2 illustrates a principle diagram of a protection system according to an embodiment of the present invention. According to this embodiment, the energy storage capacitor is charged by a direct boost charging mode with resistance current-limiting, and the energy storage capacitor is charged by extra electrical energy that exceeds the electrical energy needed for a normal operation of a MCU unit.

According to FIG. 2, the electronic release comprises a current transformer 201, a filtering and rectification circuit 209, a control power supply circuit 202, a release power supply circuit 203, a control circuit and a release circuit.

The current transformer 201 is connected in series in a primary loop. The current transformer 201 generates an induced current from the primary loop current. The filtering and rectification circuit 209 is connected to an output of the current transformer 201. The filtering and rectification circuit 209 filters and rectifies the induced current of the current transformer. An output of the filtering and rectification circuit 209 is divided into two paths, which are connected to the control power supply circuit 202 and the release power supply circuit 203 respectively. Inputs of the control power supply circuit 202 and the release power supply circuit 203 are both connected to the output of the filtering and rectification circuit 209. According to the embodiment shown in the figure, the control power supply circuit 202 and the release power supply circuit 203 each comprises a diode 202a and 203a, respectively. The control circuit comprises a step-down circuit 204 and a MCU unit 205. The step-down circuit 204 is connected to an output of the control power supply circuit 202. The step-down circuit 204 reduces an output voltage of the control power supply circuit 202 to a rated operation voltage of the MCU unit 205. The MCU unit 205 is connected to an output of the step-down circuit 204 and is supplied by the step-down circuit 204. The MCU unit 205 also receives a monitoring signal indicating whether a fault exists in the primary loop. The release circuit comprises an energy storage capacitor 206, a magnetic flux converter 207 and a control switch 208 which are connected in series. The output of the release power supply circuit 203 is connected to the energy storage capacitor 206, the output of the MCU unit is connected to the control switch 208 to turn on or off the control switch. The energy storage capacitor 206, the magnetic flux converter 207 and the control switch 208 form a complete loop, that is, the release circuit. During normal operation, the MCU unit 205 controls the control switch 208 to turn off and the release circuit is turned off. The release power supply circuit 203 charges the energy storage capacitor 206. When the primary loop fails, the MCU unit 205 outputs a release instruction to turn on the control switch 208, the release circuit is turned on. The energy storage capacitor 206 discharges and causes an appearance of a current in a coil of the magnetic flux converter 207. This current generates an electromagnetic force, which assists a counter-force springs of the magnetic flux converter to overcome a magnetic force of a permanent magnet, so that an ejector rod is ejected out and drives a release mechanism to operate and break a circuit breaker. Continue with FIG. 2, the difference between FIG. 2 and FIG. 1 is that FIG. 2 further comprises a protection device. The protection device shown in FIG. 2 comprises a resistor 210, a boost circuit 211 and a diode 214 which are connected in series. A first end of the resistor 210 is connected to the control power supply circuit 202, a second end of the resistor 210 is connected to an input of the boost circuit 211. An output of the boost circuit 211 is connected to the energy storage capacitor 206 through the diode 214, the output of the diode 214 is connected to the MCU unit 205. The protection device uses a part of the electrical energy that is previously supplied to the control circuit to charge the energy storage capacitor 206. An energy consumption of the MCU unit 205 during normal operation is not very large, and the MCU unit 205 is not always in an operation status, therefore, there exists extra electrical energy among the electrical energy supplied to the MCU unit 205 by the control power supply circuit. According to prior art, the output of the control power supply circuit and the output of the release power supply circuit are completely separated, therefore, the extra electrical energy outputted by the control power supply circuit is wasted. However, the output of the release power supply circuit is insufficient under the condition of small current. According to the protection system of the present invention, the extra electrical energy is transferred from control power supply circuit to the release power supply circuit and is used for supplementing the energy to charge the energy storage capacitor. In order to charge the energy storage capacitor to a sufficiently high voltage (DC12V~DC15V), a boost circuit 211 is provided in the protection device. The boost circuit 211 outputs a higher voltage, so that the energy storage capacitor can be charged to a voltage that is high enough. The output of the control power supply circuit is preferentially supplied to the MCU unit, and the output of the MCU unit is preferentially provided to the MCU unit, the extra electrical energy that exceeds the electrical energy needed for a normal operation of the MCU unit is provided to charge the energy storage capacitor through the protection device.

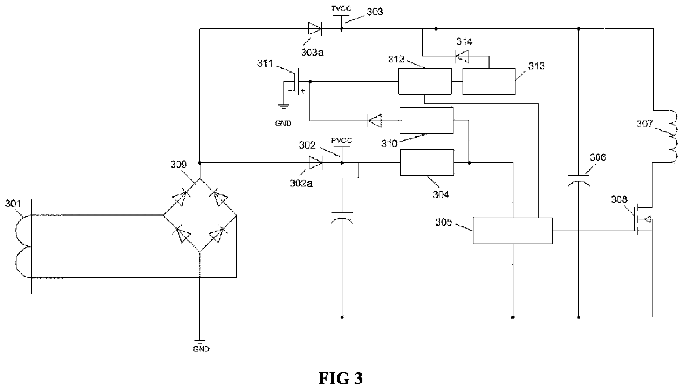

As shown in FIG. 3, FIG. 3 illustrates a principle diagram of a protection system according to an example not making part of the claimed subject-matter. According to this example, the energy storage capacitor is charged by a rechargeable battery and using a PWM boost mode. Firstly, the extra electrical energy that exceeds the electrical energy needed for a normal operation of the MCU unit is provided to charge the rechargeable battery so that the rechargeable battery can maintain a sufficient electrical energy. Then the rechargeable battery charges the energy storage capacitor in a PWM mode. A charging time of the energy storage capacitor can be controlled by adjusting a duty cycle of the PWM.

Compared with the embodiment shown in FIG. 2, the example shown in FIG. 3 differs from the protection device. A current transformer 301, a filtering and rectification circuit 309, a control power supply circuit 302, a release power supply circuit 303, a control circuit and a release circuit are the same as those in the embodiment. The control circuit includes a step-down circuit 304 and a MCU unit 305, the release circuit includes an energy storage capacitor 306, a magnetic flux converter 307 and a control switch 308 which are connected in series, which are also the same as those in the embodiment.

In the example, the protection device comprises a rechargeable battery circuit and a PWM charging circuit. The rechargeable battery circuit comprises a charging circuit 310 and a rechargeable battery 311. An input of the charging circuit 310 is connected to the output of the step-down circuit 304. An output of the charging circuit 310 is connected to the rechargeable battery 311 through a diode 315. Extra electrical energy that exceeds the electrical energy needed for a normal operation of the MCU unit is provided to charge the rechargeable battery 311 so that the rechargeable battery 311 can maintain a sufficient electrical energy. As the MCU unit 305 is not always in an operation status, therefore, there exists extra electrical energy and the extra electrical energy is used to charge the rechargeable battery 311.

The PWM charging circuit comprises a control circuit 312 and a boost circuit 313. An input of the control circuit 312 is connected to an output of the rechargeable battery 311, an output of the control circuit 312 is connected to an input of the boost circuit 313, an enabling end of the control circuit 312 is connected to the MCU unit 305. An output of the boost circuit 313 is connected to the energy storage capacitor 306 through a diode 314. The MCU unit 305 outputs a duty cycle signal to the control circuit 312, the duty cycle signal is related to a fault type of the electronic release. The fault types of the electronic release may include a grounding protection fault, a short-circuit short-delay fault, an overload long-delay fault etc. For different fault types, the charging time of the energy storage capacitor 306 is different. A corresponding duty cycle signal is set according to the fault type, and the duty cycle is adjusted by the control circuit. The control circuit 312 enables the rechargeable battery 311 to charge the energy storage capacitor 306 in a PWM mode according to the duty cycle signal, a rapid boost or a slow boost may be achieved. Similarly, in order to charge the energy storage capacitor 306 to a sufficiently high voltage level (DC12V~DC15V), a boost circuit 313 is arranged in the protection device. The boost circuit 313 outputs a higher voltage to enable the energy storage capacitor 306 to be charged to a voltage that is high enough.

The boost circuit, the control circuit, the charging circuit and the rechargeable battery in the embodiment may be implemented by conventional technologies.

The present invention also provides a protection method for electronic release comprising providing an electronic release comprising an energy storage capacitor and a MCU unit. The method further comprises providing an additional charge to the energy storage capacitor of the electronic release, and charging energy storage capacitor to a sufficient voltage when a primary loop current is a small current. The small current is 0.4~0.8 times of a rated primary loop current, and the sufficient voltage is 12V~15V. The additional charge provided to the energy storage capacitor is supplied by extra electrical energy that exceeds the electrical energy needed for a normal operation of the MCU unit of the electronic release. In some embodiment, the small current is 0.4~0.5 times of a rated primary loop current. Even in some embodiment, the small current is 0.4~0.45 times of a rated primary loop current.

According to an embodiment, the extra electrical energy is outputted from a control power supply circuit of the electronic release, and is used to charge the energy storage capacitor in a direct-current manner after resistance current-limiting and boosting. Such an embodiment may be realized by the principle diagram shown in FIG. 1.

According to another embodiment, the additional charge is supplied by a rechargeable battery, the rechargeable battery is charged by the extra electrical energy that exceeds the electrical energy needed for a normal operation of a MCU unit of the electronic release, the MCU unit outputs a duty cycle signal according to a fault type of the electronic release, the rechargeable battery charges the energy storage capacitor in a PWM mode through a control circuit and a boost circuit based on the duty cycle. Such an embodiment may be realized by the principle diagram shown in FIG. 2.

The protection system and the protection method for electronic release of the present invention charge the energy storage capacitor with extra electrical energy that exceeds the electrical energy needed for a normal operation of a MCU unit. The energy storage capacitor can still be charged to a sufficient voltage when the current in the primary loop is a small current, so that the magnetic flux converter can generate an electromagnetic force that is large enough to trigger the release mechanism.

The above embodiments are provided to those skilled in the art to realize or use the invention, under the condition that various modifications or changes being made by those skilled in the art without departing the scope of the invention, which is determined by the claims. The above embodiments may be modified and changed variously, therefore the protection scope of the invention is not limited by the above embodiments, rather, it should conform to the scope of the claims.

## Claims

1. A protection system for electronic release comprising:
an electronic release comprising an energy storage capacitor (206; 306), a control power supply circuit (202; 302), and a MCU unit (205; 305); and
a protection device connected to the energy storage capacitor (206; 306), wherein:
the control power supply circuit (202; 302) is configured to charge the energy storage capacitor (206; 306) to a sufficient voltage when a primary loop current is a small current,
the small current is 0.4~0.8 times of a rated primary loop current, and
the sufficient voltage is 12V~15V, and
the control power supply circuit (202; 302) is configured to provide the energy storage capacitor (206; 306) with an additional charge supplied by extra electrical energy exceeding the electrical energy needed for a normal operation of the MCU unit (205; 305), and
wherein the electronic release further comprises:
a current transformer (201; 301) connected in series in a primary loop and generating an induced current from the primary loop current;
a filtering and rectification circuit (209; 309) connected to an output of the current transformer (201; 301), the filtering and rectification circuit (209; 309) filtering and rectifying the induced current of the current transformer (201; 301), wherein the control power supply circuit (202; 302) is connected to an output of the filtering and rectification circuit (209; 309);
a release power supply circuit (203; 303) connected to the output of the filtering and rectification circuit (209; 309);
a control circuit comprising a step-down circuit (204; 304) and the MCU unit (205; 305), the step-down circuit (204; 304) being connected to an output of the control power supply circuit (202; 302) and reducing an output voltage of the control power supply circuit (202; 302), the MCU unit (205; 305) being connected to an output of the step-down circuit (204; 304) and being supplied by the step-down circuit (204; 304); and
a release circuit comprising the energy storage capacitor (206; 306), a magnetic flux converter (207; 307) and a control switch (208; 308) which are connected in series, the output of the control power supply circuit (202; 302) being connected to the energy storage capacitor (206; 306), the output of the MCU unit (205; 305) being connected to the control switch (208; 308) to turn on or off the control switch (208; 308);
wherein during normal operation, the MCU unit (205; 305) controls the control switch (208; 308) to turn off and the release circuit is turned off, the release power supply circuit (203; 303) charges the energy storage capacitor (206; 306), when the primary loop fails, the MCU unit (205; 305) outputs a release instruction to turn on the control switch (208; 308), the release circuit is turned on, the energy storage capacitor (206; 306) discharges to enable the magnetic flux converter (207; 307) to generate an electromagnetic force and trigger a release mechanism,
**characterized in that**
the protection device comprises a resistor (210), a boost circuit (211) and a diode (214) which are connected in series, a first end of the resistor (210) is connected to the control power supply circuit (202), a second end of the resistor (210) is connected to an input of the boost circuit (211), an output of the boost circuit (211) is connected to the energy storage capacitor (206) through the diode (214), the output of the diode (214) is connected to the MCU unit (205), and **in that**
the output of the control power supply circuit (202) is provided to the MCU unit (205), and the extra electrical energy is used to charge the energy storage capacitor (206) through the protection device.

2. A protection method for electronic release, comprising:
providing an electronic release comprising an energy storage capacitor (206; 306), a control power supply circuit (202; 302), and a MCU unit (205; 305);
providing a protection device connected to the energy storage capacitor (206; 306);
providing additional charge to the energy storage capacitor (206; 306) of the electronic release,
charging the energy storage capacitor (206; 306) to a sufficient voltage when a primary loop current is a small current,
wherein:
the small current is 0.4~0.8 times of a rated primary loop current, and
the sufficient voltage is 12V~15V,
wherein the additional charge provided to the energy storage capacitor (206; 306) is supplied by extra electrical energy that exceeds the electrical energy needed for a normal operation of the MCU unit (205; 305) of the electronic release,
**characterized in that**
the protection device comprises a resistor (210), a boost circuit (211) and a diode (214) which are connected in series, a first end of the resistor (210) is connected to the control power supply circuit (202), a second end of the resistor (210) is connected to an input of the boost circuit (211), an output of the boost circuit (211) is connected to the energy storage capacitor (206) through the diode (214), the output of the diode (214) is connected to the MCU unit (205), and **in that**
the protection method further comprises:
providing output of the control power supply circuit (202) to the MCU unit (205), and
using the extra electrical energy to charge the energy storage capacitor (206) through the protection device.

3. The protection method for electronic release according to claim 2, wherein the extra electrical energy is outputted from a control power supply circuit (202; 302) of the electronic release, and is used to charge the energy storage capacitor (206; 306) in a direct-current manner after resistance current-limiting and boosting.

## Patentansprüche

1. Ein Schutzsystem für elektronische Auslöser, aufweisend:
einen elektronischen Auslöser, aufweisend einen Energiespeicherkondensator (206; 306), eine Steuerungs-Energieversorgungsschaltung (202; 302) und eine MCU-Einheit (205; 305); und
eine Schutzvorrichtung, die mit dem Energiespeicherkondensator (206; 306) verbunden ist, wobei:
die Steuerungs-Energieversorgungsschaltung (202; 302) konfiguriert ist, um den Energiespeicherkondensator (206; 306) auf eine ausreichende Spannung aufzuladen, wenn ein Primärschleifenstrom ein kleiner Strom ist,
der kleine Strom das 0,4- bis 0,8-fache eines Nennprimärschleifenstroms beträgt und
die ausreichende Spannung 12 V bis 15 V beträgt und
die Steuerungs-Energieversorgungsschaltung (202; 302) konfiguriert ist, um dem Energiespeicherkondensator (206; 306) eine zusätzliche Ladung bereitzustellen, die durch zusätzliche elektrische Energie geliefert wird, die die für einen normalen Betrieb der MCU-Einheit (205; 305) benötigte elektrische Energie übersteigt, und
wobei der elektronische Auslöser ferner aufweist:
einen Stromwandler (201; 301), der in einer Primärschleife in Reihe geschaltet ist und einen induzierten Strom aus dem Primärschleifenstrom erzeugt;
eine Filter- und Gleichrichterschaltung (209; 309), die mit einem Ausgang des Stromwandlers (201; 301) verbunden ist, wobei die Filter- und Gleichrichterschaltung (209; 309) den induzierten Strom des Stromwandlers (201; 301) filtert und gleichrichtet, wobei die Steuerungs-Energieversorgungsschaltung (202; 302) mit einem Ausgang der Filter- und Gleichrichterschaltung (209; 309) verbunden ist;
eine Auslöse-Energieversorgungsschaltung (203; 303), die mit dem Ausgang der Filter- und Gleichrichterschaltung (209; 309) verbunden ist;
eine Steuerungsschaltung, die eine Abwärtswandlerschaltung (204; 304) und die MCU-Einheit (205; 305) aufweist, wobei die Abwärtswandlerschaltung (204; 304) mit einem Ausgang der Steuerungs-Energieversorgungsschaltung (202; 302) verbunden ist und eine Ausgangsspannung der Steuerungs-Energieversorgungsschaltung (202; 302) reduziert, wobei die MCU-Einheit (205; 305) mit einem Ausgang der Abwärtswandlerschaltung (204; 304) verbunden ist und von der Abwärtswandlerschaltung (204; 304) versorgt wird; und
eine Auslöseschaltung, aufweisend den Energiespeicherkondensator (206; 306), einen Magnetflusswandler (207; 307) und einen Steuerungsschalter (208; 308), die in Reihe geschaltet sind, wobei der Ausgang der Steuerungs-Energieversorgungsschaltung (202; 302) mit dem Energiespeicherkondensator (206; 306) verbunden ist, wobei der Ausgang der MCU-Einheit (205; 305) mit dem Steuerungsschalter (208; 308) verbunden ist, um den Steuerungsschalter (208; 308) ein- oder auszuschalten;
wobei während des normalen Betriebs die MCU-Einheit (205; 305) den Steuerungsschalter (208; 308) zum Ausschalten steuert und die Auslöseschaltung ausgeschaltet ist, die Auslöse-Energieversorgungsschaltung (203; 303) den Energiespeicherkondensator (206; 306) auflädt, wenn die Primärschleife ausfällt, die (205; 305) eine Auslösebefehl zum Einschalten des Steuerungsschalters (208; 308) ausgibt, die Auslöseschaltung eingeschaltet wird, der Energiespeicherkondensator (206; 306) sich entlädt, um den Magnetflusswandler (207; 307) in die Lage zu versetzen, eine elektromagnetische Kraft zu erzeugen und einen Auslösemechanismus auszulösen,
**dadurch gekennzeichnet, dass**
die Schutzvorrichtung einen Widerstand (210), eine Boost-Schaltung (211) und eine Diode (214) aufweist, die in Reihe geschaltet sind, wobei ein erstes Ende des Widerstands (210) mit der Steuerungs-Energieversorgungsschaltung (202) verbunden ist, ein zweites Ende des Widerstands (210) mit einem Eingang des Boost-Schaltkreises (211) verbunden ist, ein Ausgang des Boost-Schaltkreises (211) über die Diode (214) mit dem Energiespeicherkondensator (206) verbunden ist, der Ausgang der Diode (214) mit der MCU-Einheit (205) verbunden ist und
der Ausgang der Steuerungs-Energieversorgungsschaltung (202) der MCU-Einheit (205) bereitgestellt wird und die zusätzliche elektrische Energie verwendet wird, um den Energiespeicherkondensator (206) über die Schutzvorrichtung aufzuladen.

2. Ein Verfahren zum Schutz eines elektronischen Auslösers, die folgenden Schritte aufweisend:
Bereitstellen eines elektronischen Auslösers, der einen Energiespeicherkondensator (206; 306), eine Steuerungs-Energieversorgungsschaltung (202; 302) und eine MCU-Einheit (205; 305) aufweist;
Bereitstellen einer Schutzvorrichtung, die mit dem Energiespeicherkondensator (206; 306) verbunden ist;
Bereitstellen einer zusätzlichen Ladung für den Energiespeicherkondensator (206; 306) des elektronischen Auslösers,
Laden des Energiespeicherkondensators (206; 306) auf eine ausreichende Spannung, wenn ein Primärschleifenstrom ein kleiner Strom ist,
wobei:
der kleine Strom das 0,4- bis 0,8-fache eines Nennprimärschleifenstroms beträgt und
die ausreichende Spannung 12 V bis 15 V beträgt,
wobei die zusätzliche Ladung, die dem Energiespeicherkondensator (206; 306) bereitgestellt wird, durch zusätzliche elektrische Energie geliefert wird, die die elektrische Energie übersteigt, die für einen normalen Betrieb der MCU-Einheit (205; 305) des elektronischen Auslösers benötigt wird,
**dadurch gekennzeichnet, dass**
die Schutzvorrichtung einen Widerstand (210), eine Boost-Schaltung (211) und eine Diode (214) aufweist, die in Reihe geschaltet sind, wobei ein erstes Ende des Widerstands (210) mit der Steuerungs-Energieversorgungsschaltung (202) verbunden ist, ein zweites Ende des Widerstands (210) mit einem Eingang des Boost-Schaltkreises (211) verbunden ist, ein Ausgang des Boost-Schaltkreises (211) über die Diode (214) mit dem Energiespeicherkondensator (206) verbunden ist, der Ausgang der Diode (214) mit der MCU-Einheit (205) verbunden ist, und dass
Das Schutzverfahren ferner die folgenden Schritte aufweist:
Bereitstellen einer Ausgabe der Steuerungs-Energieversorgungsschaltung (202) an die MCU-Einheit (205), und
Verwenden der zusätzlichen elektrischen Energie zum Laden des Energiespeicherkondensators (206) durch die Schutzvorrichtung.

3. Das Verfahren zum Schutz eines elektronischen Auslösers gemäß Anspruch 2, wobei die zusätzliche elektrische Energie von einer Steuerungs-Energieversorgungsschaltung (202; 302) des elektronischen Auslösers ausgegeben und zum Laden des Energiespeicherkondensators (206; 306) auf Gleichstrombasis nach einer Widerstandsstrombegrenzung und -verstärkung verwendet wird.

## Revendications

1. Système de protection pour un déclencheur électronique comprenant :
un déclencheur électronique comprenant un condensateur de stockage d'énergie (206 ; 306), un circuit d'alimentation de contrôle (202 ; 302) et une unité MCU (205 ; 305) ; et
un dispositif de protection connecté au condensateur de stockage d'énergie (206 ; 306), dans lequel :
le circuit d'alimentation de contrôle (202 ; 302) est configuré pour charger le condensateur de stockage d'énergie (206 ; 306) à une tension suffisante lorsqu'un courant de boucle primaire est un courant faible,
le courant faible est 0,4~0,8 fois un courant nominal de boucle primaire, et
la tension suffisante est de 12V~15V, et
le circuit d'alimentation de contrôle (202 ; 302) est configuré pour fournir au condensateur de stockage d'énergie (206 ; 306) une charge additionnelle fournie par une énergie électrique supplémentaire dépassant l'énergie électrique nécessaire au fonctionnement normal de l'unité MCU (205 ; 305), et
dans lequel le déclencheur électronique comprend en outre :
un transformateur de courant (201 ; 301) connecté en série dans une boucle primaire et générant un courant induit à partir du courant de la boucle primaire ;
un circuit de filtrage et de redressement (209 ; 309) connecté à une sortie du transformateur de courant (201 ; 301), le circuit de filtrage et de redressement (209 ; 309) filtrant et redressant le courant induit du transformateur de courant (201 ; 301), le circuit d'alimentation de contrôle (202 ; 302) étant connecté à une sortie du circuit de filtrage et de redressement (209 ; 309) ;
un circuit d'alimentation de déclenchement (203 ; 303) connecté à la sortie du circuit de filtrage et de redressement (209 ; 309) ;
un circuit de contrôle comprenant un circuit abaisseur (204 ; 304) et l'unité MCU (205 ; 305), le circuit abaisseur (204 ; 304) étant connecté à une sortie du circuit d'alimentation de contrôle (202 ; 302) et réduisant une tension de sortie du circuit d'alimentation de contrôle (202 ; 302), l'unité MCU (205 ; 305) étant connectée à une sortie du circuit abaisseur (204 ; 304) et étant alimentée par le circuit abaisseur (204 ; 304) ; et
un circuit de déclenchement comprenant le condensateur de stockage d'énergie (206 ; 306), un convertisseur de flux magnétique (207 ; 307) et un interrupteur de commande (208 ; 308) qui sont connectés en série, la sortie du circuit d'alimentation de contrôle (202 ; 302) étant connectée au condensateur de stockage d'énergie (206 ; 306), la sortie de l'unité MCU (205 ; 305) étant connectée à l'interrupteur de commande (208 ; 308) afin d'activer ou de désactiver l'interrupteur de commande (208 ; 308) ;
dans lequel, en fonctionnement normal, l'unité MCU (205 ; 305) commande la désactivation de l'interrupteur de commande (208 ; 308), et le circuit de déclenchement est désactivé, le circuit d'alimentation de déclenchement (203 ; 303) charge le condensateur de stockage d'énergie (206 ; 306), lorsque la boucle primaire est défaillante, l'unité MCU (205 ; 305) émet une instruction de déclenchement pour activer l'interrupteur de commande (208 ; 308), le circuit de déclenchement est activé, le condensateur de stockage d'énergie (206 ; 306) se décharge pour permettre au convertisseur de flux magnétique (207 ; 307) de générer une force électromagnétique et de déclencher un mécanisme de déclenchement,
**caractérisé en ce que** :
le dispositif de protection comprend une résistance (210), un circuit d'amplification (211) et une diode (214) qui sont connectés en série, une première extrémité de la résistance (210) est connectée au circuit d'alimentation de contrôle (202), une deuxième extrémité de la résistance (210) est connectée à une entrée du circuit d'amplification (211), une sortie du circuit d'amplification (211) est connectée au condensateur de stockage d'énergie (206) par l'intermédiaire de la diode (214), la sortie de la diode (214) est connectée à l'unité MCU (205), et **en ce que** :
la sortie du circuit d'alimentation de contrôle (202) est fournie à l'unité MCU (205), et l'énergie électrique supplémentaire est utilisée pour charger le condensateur de stockage d'énergie (206) par l'intermédiaire du dispositif de protection.

2. Procédé de protection pour un déclencheur électronique, comprenant les étapes suivantes :
fournir un déclencheur électronique comprenant un condensateur de stockage d'énergie (206 ; 306), un circuit d'alimentation de contrôle (202 ; 302), et une unité MCU (205 ; 305) ;
fournir un dispositif de protection connecté au condensateur de stockage d'énergie (206 ; 306) ;
fournir une charge additionnelle au condensateur de stockage d'énergie (206 ; 306) du déclencheur électronique,
charger le condensateur de stockage d'énergie (206 ; 306) à une tension suffisante lorsqu'un courant de boucle primaire est un courant faible,
dans lequel :
le courant faible est 0,4~0,8 fois un courant nominal de boucle primaire, et
la tension suffisante est de 12V~15V,
dans lequel la charge additionnelle fournie au condensateur de stockage d'énergie (206 ; 306) est fournie par une énergie électrique supplémentaire qui dépasse l'énergie électrique nécessaire au fonctionnement normal de l'unité MCU (205 ; 305) du déclencheur électronique,
**caractérisé en ce que** :
le dispositif de protection comprend une résistance (210), un circuit d'amplification (211) et une diode (214) qui sont connectés en série, une première extrémité de la résistance (210) est connectée au circuit d'alimentation de contrôle (202), une deuxième extrémité de la résistance (210) est connectée à une entrée du circuit d'amplification (211), une sortie du circuit d'amplification (211) est connectée au condensateur de stockage d'énergie (206) par l'intermédiaire de la diode (214), la sortie de la diode (214) est connectée à l'unité MCU (205), et **en ce que** :
le procédé de protection comprend en outre les étapes suivantes :
fournir une sortie du circuit d'alimentation de contrôle (202) à l'unité MCU (205), et
utiliser l'énergie électrique supplémentaire pour charger le condensateur de stockage d'énergie (206) par l'intermédiaire du dispositif de protection.

3. Procédé de protection du déclencheur électronique selon la revendication 2, dans lequel l'énergie électrique supplémentaire est émise par un circuit d'alimentation de contrôle (202 ; 302) du déclencheur électronique, et est utilisée pour charger le condensateur de stockage d'énergie (206 ; 306) en courant continu après la limitation et l'amplification du courant de résistance.
